# EUROPEAN PATENT APPLICATION

(11) **EP 1 995 300 A1**
(43) Date of publication of application: **26.11.2008**
(21) Application number: 06834799.6
(22) Date of filing: 15.12.2006
(51) Int. Cl.: C10M 141/08, F16C 33/66, C10M 117/04, C10M 133/16, C10M 133/40, C10M 135/18, C10N 10/02, C10N 30/08, C10N 40/02, C10N 50/10

(54) **GREASE COMPOSITION AND BEARING**

(30) Priority: 08.03.2006 JP 2006062664
(71) Applicant: Kyodo Yushi Co., Ltd., Kanagawa 251-8588 (JP)
(72) Inventor: SAITA, Osamu, Fujisawa-shi, Kanagawa 2518588 (JP); ONUKI, Yuji, Fujisawa-shi, Kanagawa 2518588 (JP)
(74) Representative: Vossius & Partner
(86) International application number: PCT/JP2006/325056
(87) International publication number: WO 2007/102266

(57) **Abstract**

A grease composition which is suitable for a ball bearing exposed to high temperatures and exhibits stable lubricity for a prolonged period of time, and a bearing which encapsulates the grease composition are provided.

A grease composition comprising (a) a base oil, (b) a thickener, (c) a compound having alkylthiocarbamoyl group of the general formula (1), and an amine-ketone condensate-based antioxidant. A grease composition further comprising (e) a metal inactivator. 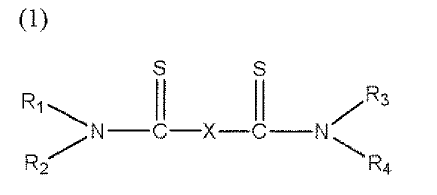 (wherein R₁, R₂, R₃, R₄ are independently C₁- C₂₀ alkyl, and X is S, S-S, S-CH₂-S, S-CH₂CH₂-S, or S-CH₂CH₂CH₂-S )

## Description

### Technical Field

The present invention relates to a grease composition comprising a base oil, a thickener, and a specific antioxidant. Particularly, the present invention relates to a grease composition which is suitable for use in a ball bearing exposed to high temperatures and of which lubricant life is improved; and a bearing which encapsulates the grease composition therein.

### Background Art

The properties required for a grease composition to improve lubricant life thereof are thermo-oxidative stability and the like, and various proposals for improving the properties of the grease composition have hitherto been made.

Improved lubricants in fatigue life have been proposed, in which a compound having alkylthiocarbamoyl group and a molybdenum compound are added to a lubricant base material, or an ester compound is further added thereto, thereby improving fatigue life (see, for example, Patent Document 1). An abrasive resistant extreme pressure composition with improved antioxidative property, which composition comprises (a) methylenebis(di-n-butyldithiocarbamate) and (b) a diphenylamine derivative of tolutriazol or benzotriazol, wherein the ratio (a):(b) in percent by mass is in the range of about 4:1 to about 50:1; and a lubricant comprising the extreme pressure composition have been proposed (see, for example, Patent Document 2). Additionally, a lithium grease composition which comprises (a) a lubricating oil, (b) at least one compound selected from the group consisting of a lithium salt of C₁₂-C₂₄ aliphatic monocarboxylic acid comprising at least one hydroxyl group, a dilithium salt of C₂-C₁₂ aliphatic dicarboxylic acid, and a lithium salt of C₁₂-C₂₄ aliphatic monocarboxylic acid, and (c) at least one compound selected from the group consisting of 3-(N-salicyloyl)amino-1,2,4-triazol and decamethylene-dicarboxylic acid-disalicyloylhydrazide, has been proposed (see, for example, Patent Document 3).
However, even if the grease composition using these additives is employed in a roll bearing exposed to high temperatures, thermo-oxidative stability and lubricant life are insufficient, and a grease composition satisfying users has not been obtained at present.

Patent Document 1: JP-B-03-31760
Patent Document 2: JP-T-2005-509732
Patent Document 3: Japanese Patent No. 2936084

### Disclosure of the Invention

### Problems to be Solved by the Invention

An object of the present invention is to provide a grease composition which is suitable for a ball bearing exposed to high temperatures and exhibits stable lubricity for a prolonged period of time. That is, the object of the present invention is to provide a grease composition which is excellent in thermo-oxidative stability and lubricant life.
Another object of the present invention is to provide a bearing which encapsulates the grease composition.

### Means for Solving the Problems

The present inventors intensively studied in order to attain the above-described object to improve thermo-oxidative stability and lubricant life by using a base oil, a thickener, and a specific antioxidant; and preferably by further using a metal inactivator, thereby completing the grease composition which is suitable for a ball bearing exposed to high temperatures and exhibits stable lubricity for a prolonged period of time.

The present invention provides the following grease composition and a bearing.
1. A grease composition comprising (a) a base oil, (b) a thickener, (c) a compound having alkylthiocarbamoyl group of the general formula (1), and an amine-ketone condensate-based antioxidant. 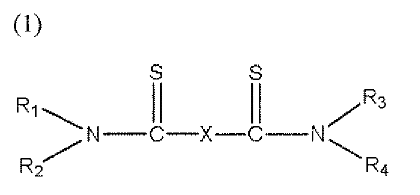 (wherein R₁, R₂, R₃, R₄ are independently C₁- C₂₀ alkyl, and X is S, S-S, S-CH₂-S, S-CH₂CH₂-S, or S-CH₂CH₂CH₂-S)
2. The grease composition according to the above-item 1, wherein the thickener is at least one selected from the group consisting of lithium soaps and lithium complex soaps.
3. The grease composition according to the above-item 1 or 2, further comprising (e) a metal inactivator.
4. The grease composition according to any one of the above-items 1 to 3, which comprises (a) 50 or more percent by mass of the base oil, (b) 1-30 percent by mass of the thickener, (c) 0.1-10 percent by mass of the compound having alkylthiocarbamoyl group of the general formula (1), and (d) 0.1-10 percent by mass of the amine-ketone condensate-based antioxidant based on the entire grease composition.
5. The grease composition according to any one of the above-items 2 to 4, comprising (e) 0.1-10 percent by mass of the metal inactivator.
6. A bearing which encapsulates the grease composition according to any one of the above-items 1 to 5.

### Effects of the Invention

The grease composition of the present invention is very useful in that it shows improved thermo-oxidative stability and lubricant life, and is suitable for use in a ball bearing exposed to high temperatures and exhibits stable lubricity for a prolonged period of time.

A satisfactory proposal has not been made on a grease composition of which thermo-oxidative stability and lubricant life are improved, which is suitable for use in a ball bearing exposed to high temperatures and which exhibits stable lubricity for a prolonged period of time by using a specific antioxidant and a metal inactivator, which grease composition is encapsulated in the bearing together with a base oil. Thus, the present invention is very useful.

The present invention was made based on the discovery that thermo-oxidative stability and lubricant life are drastically improved by using a specific antioxidant, or by further using a specific metal inactivator, more preferably by specifying the mixing ratio of these.

The reason why the grease composition of the present invention is excellent in lubricant life under the condition of high temperature is thought as follows. That is, the function of each component is well exhibited by using the antioxidant particularly selected or by further using a metal inactivator in the grease composition comprising a base oil and a thickener, and excellent thermo-oxidative stability, lubricity and lubricant life are given to the grease composition exposed to high temperatures also by virtue of the proper formulation of the grease composition.

### Best Mode for Carrying Out the Invention

The present invention will be explained in detail below.
The base oil used for the grease composition of the present invention is preferably one comprising at least one of the groups of mineral oils and/or synthetic oils. Examples of the synthetic oil include ester synthetic oils typified by esters and polyol esters; synthetic hydrocarbon oils typified by poly(α-olefin) and polybutene; ether synthetic oils typified by alkyl diphenyl ethers and polypropyleneglycol; and silicone oils, fluorinated oils, and the like. The synthetic oil is not restricted as long as it can be used in a lubricating oil and a grease composition.
The thickener used in the grease composition of the present invention is at least one selected from the group consisting of metal soap thickeners; urea thickeners typified by diurea; inorganic thickeners typified by organic clay and silica; organic thickeners typified by polytetrafluoroethylene and melamine cyanurate. Preferred examples of the thickener are those selected from the group consisting of lithium soaps and lithium complex soaps, and most preferably lithium soaps, for example lithium stearate and lithium 12-hydroxystearate.

The antioxidant used in the grease composition of the present invention is (c) the compound (ATC) having the alkylthiocarbamoyl group of the general formula (1); and (d) the amine-ketone condensate-based antioxidant.
Specific examples of the compound (ATC) having an alkylthiocarbamoyl group of the general formula (1) include methylenebis(di-n-butyldithiocarbamate), bis(dimethylcarbamoyl)monosulfide, bis(dimethylcarbamoyl)disulfide, bis(dibutylcarbamoyl)disulfide, bis(diamylcarbamoyl)disulfide, bis(dioctylcarbamoyl)disulfide, and the like.
Examples of (d) the amine-ketone condensate-based antioxidant include TMDQ (2,2,4-trimethyl-1,2-dihydroquinoline polymer) of the formula (2) designated by JIS K6220-3 code, ETMDQ (6-ethoxy-2,2,4-trimethyl-1,2-dihydroquinoline) of the formula (3), ADPAL (the reaction mixture of diphenylamine and acetone), and the like.

TMDQ; 2,2,4-trimethyl-1,2-dihydroquinoline polymer 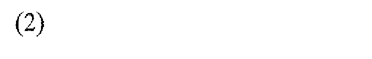 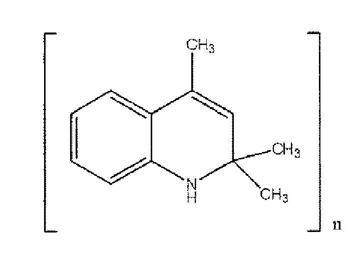 wherein n is an integer of 1 to 10, preferably 1 to 6, most preferably 2 to 3.

ETMDQ; 6-ethoxy-2,2,4-trimethyl-1,2-dihydroquinoline

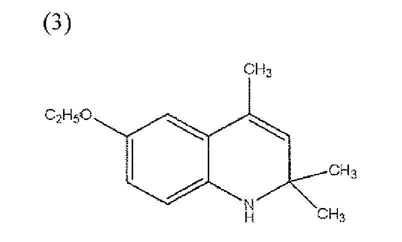

The grease composition of the present invention preferably comprises a metal inactivator. Examples of the metal inactivator include oxalic acid derivatives, salicylic acid derivatives, hydrazine derivatives and the like. Especially, examples thereof include 3-(N-salicyloyl)amino-1,2,4-triazol of the formula (4), decamethylenecarboxylic acid disalicyloylhydrazide (MCSH) of the formula (5), N,N-bis[3-(3,5-di-t-butyl-4-hydroxyphenyl)propionyl]hydrazine of the formula (6), isophthalic acid bis(2-phenoxypropionylhydrazide), N-formyl-N'-salicyloylhydrazine, 2,2-oxamidebis-[ethyl-3-(3,5-di-t-butyl-4-hydroxyphenyl)propionate], oxalyl-bis-benzylidene-hydrazide and the like.

3-(N-salicyloyl)amino-1,2,4-triazol

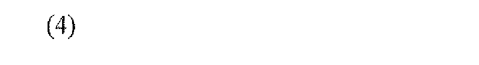

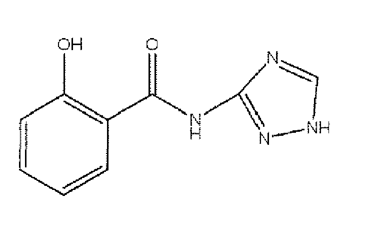

MCSH; decamethylenecarboxylic acid disalicyloylhydrazide

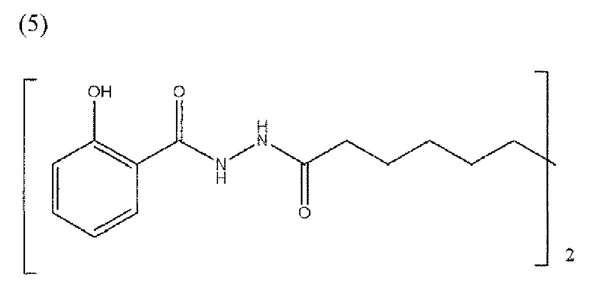

N,N-bis[3-(3,5-di-t-butyl-4-hydroxyphenyl)propionyl]hydrazine

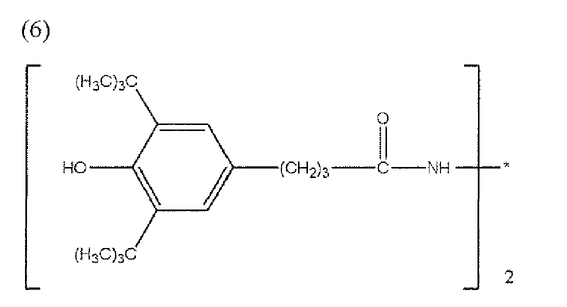

The grease composition of the present invention comprises (a) 50 or more percent by mass, preferably 60 or more percent by mass of the base oil, (b) 1-30 percent by mass, preferably 5-20 percent by mass of the thickener, (c) 0.1-10 percent by mass, preferably 0.5-5 percent by mass of the compound having alkylthiocarbamoyl group of the general formula (1), and (d) 0.1-10 percent by mass, preferably 0.5-5 percent by mass of the amine-ketone condensate-based antioxidant based on the entire grease composition. To the mixture of (a)-(d), 0.1-10 percent by mass, preferably 0.5-5 percent by mass of the metal inactivator may be added.
The present invention also provides a bearing which encapsulates the above-described grease composition.

The present invention will be further described in detail below by way of Examples, however, the present invention is not restricted to the following Examples. Any modification without departing from the spirit of the invention is within the scope of the present invention.

### Examples

### 1. Test Greases

The grease compositions of Examples 1 to 8 and Comparative Examples 1 to 5 were prepared according to the formulation shown in Tables 1 and 2. The amount of each component is based on percent by mass.

### 2. Method for Preparing Grease

Into 467.5 g of the base oil, 82.5 g of 12-hydroxystearic acid was added, and the resulting mixture was heated to the temperature (80-90°C) at which the mixture became a clear liquid. To this mixture, a solution prepared by adding 11.9 g of lithium hydroxide monohydrate to 60 g of water and heating the obtained mixture to dissolve the solute, was added. The saponification of 12-hydroxystearic acid was carried out under vigorous stirring to obtain lithium 12-hydroxystearate. To the obtained mixture, 26 g of azelaic acid was then added, and stirring was continued until the mixture became a uniform solution. To this mixture, a solution prepared by adding 11.9 g of lithium hydroxide monohydrate to 60 g of water and heating the obtained mixture to dissolve the solute, was added. The saponification of azelaic acid was carried out under vigorous stirring. The saponification was terminated after confirming that the absorption of the unreacted fatty acid was not found by infrared spectroscopic analysis at about 60 minutes after the start of the reaction. In the subsequent heating step, the contents were slowly heated to 200°C. When the temperature of the contents reached 200°C, 400.2 g of the residual base oil was added the contents, followed by cooling them to room temperature. Lithium complex grease was obtained by mixing the contents using a three-roll mill twice. The amount of the final product was 1000 g.
The ether oil (alkyl diphenyl ether: kinematic viscosity 40°C 100 mm²/s, 100°C 12.5 mm²/s), the ester oil (pentaerythritol ester: kinematic viscosity 40°C 102 mm²/s, 100°C 12.9 mm²/s), and 1:1 mixture thereof were used as the base oil.

### 3. Analytical Method and Evaluation Test Method

### Bearing-Lubrication Life Test

The test was carried out according to the method based on ASTM D 3336. The test was conducted at 150°C, and lubricant life is expressed in terms of hour (h).

### Thin Film Test at High Temperature

An SPCC steel plate sizing 60 x 80 x 1 mm is coated with a grease having a thickness of 2 mm, and the total acid value is measured after the prescribed time (500 h) passed at the prescribed temperature (160°C).

### 4. Results of Evaluation Test

The test results of the grease compositions of Examples 1 to 6 and Comparative Examples 1 to 5 are shown in Tables 1 and 2.

**[Table 1]**

| | Example 1 | Example 2 | Example 3 | Example 4 | Example 5 | Example 6 | Example 7 | Example 8 |
|---|---|---|---|---|---|---|---|---|
| (a)ether oil | 41.75 | 41.5 | 40.25 | 40.0 | 39.5 | 38.5 | 83.5 | - |
| (a)ester oil | 41.75 | 41.5 | 40.25 | 40.0 | 39.5 | 38.5 | - | 83.5 |
| (b)thickener | 13.0 | 13.0 | 13.0 | 13.0 | 13.0 | 13.0 | 13.0 | 13.0 |
| (c)ATC*¹ | 0.5 | 0.5 | 0.5 | 1.0 | 1.0 | 2.0 | 0.5 | 0.5 |
| (d)TMDQ | 2.0 | 2.0 | 4.0 | 4.0 | 4.0 | 5.0 | 2.0 | 2.0 |
| (e)MCSH | - | 0.5 | 1.0 | - | 1.0 | 2.0 | - | - |
| Amine antioxidant*² | - | - | - | - | - | - | - | - |
| Phenol antioxidant*³ | 1.0 | 1.0 | 1.0 | 2.0 | 2.0 | 1.0 | 1.0 | 1.0 |
| Bearing-lubrication life (150°C)h | 1310 | 2750 | 1530 | 1780 | 2370 | 2260 | 1220 | 1190 |
| Evaluation results | ○ | ○ | ○ | ○ | ○ | ○ | ○ | ○ |
| Total acid value before thin film test at high temperature (mgKOH/g) | 0.04 | 0.05 | 0.05 | 0.04 | 0.07 | 0.06 | 0.06 | 0.05 |
| Total acid value after thin film test at high temperature (mgKOH/g) | .019 | 0.15 | 0.18 | 0.16 | 0.12 | 0.15 | 0.17 | 0.18 |
| Change in acid value (mgKOH/g) | 0.15 | 0.10 | 0.13 | 0.12 | 0.05 | 0.09 | 0.11 | 0.13 |
| Evaluation results on change in acid value | ○ | ○ | ○ | ○ | ○ | ○ | ○ | ○ |
| Total evaluation | ○ | ○ | ○ | ○ | ○ | ○ | ○ | ○ |

| | | | | | | | | |
|---|---|---|---|---|---|---|---|---|
| *1 ATC: methylenebis(di-n-butyldithiocarbamate) *2 Amine antioxidant: N-phenyl-1,1,3,3-tetramethylbutylnaphthalene-1-amine *3 Phenol antioxidant: pentaerythritol tetrakis(3-(3,5-di-t-butyl-4-hydroxyphenyl) propionate | | | | | | | | |

**[Table 2]**

| | Comparative Example 1 | Comparative Example 2 | Comparative Example 3 | Comparative Example 4 | Comparative Example 5 |
|---|---|---|---|---|---|
| (a)ether oil | 41.75 | - | 84.0 | 42.75 | 42.0 |
| (a)ester oil | 41.75 | 84.0 | - | 42.75 | 42.0 |
| (b)thickener | 13.0 | 13.0 | 13.0 | 13.0 | 13.0 |
| (c)ATC*¹ | - | - | - | 0.5 | - |
| (d)TMDQ | - | - | - | - | 2.0 |
| (e)MCSH | 0.5 | - | - | - | - |
| Amine antioxidant*² | 2.0 | 2.0 | 2.0 | - | - |
| Phenol antioxidant*³ | 1.0 | 1.0 | 1.0 | 1.0 | 1.0 |
| Bearing-lubrication life (150°C)h | 860 | 590 | 410 | 630 | 780 |
| Evaluation results | × | × | × | × | × |
| Total acid value before thin film test at high temperature (mgKOH/g) | 0.05 | 0.06 | 0.06 | 0.06 | 0.05 |
| Total acid value after thin film test at high temperature (mgKOH/g) | 1.90 | 2.20 | 10.6 | 1.26 | 0.68 |
| Change in acid value (mgKOH/g) | 1.85 | 2.14 | 10.54 | 1.20 | 0.63 |
| Evaluation results on change in acid value | × | × | × | × | × |
| Total evaluation | × | × | × | × | × |

### Evaluation Criteria

| | | |
|---|---|---|
| Change in acid value (mgKOH/g) | ○: 0.02 or less, | ×; over 0.20 |
| Bearing-lubrication life | ○: pass, over 1000h, | ×: fail, 1000 or less |

### Total evaluation

○: Both of change in acid value and bearing-lubrication life passed the criteria (○).
×: Change in Acid Value and/or bearing-lubrication life failed(×).

### Test Results

The grease compositions of Examples 1,4,7 and 8 comprising components (a)-(d), and Examples 2,3,5 and 6 comprising components (a)-(e) showed smaller changes in acid value, and were excellent in thermo-oxidative stability. All the grease compositions attained criteria of bearing-lubrication life, and passed the criteria of the total evaluation.
On the other hand, in Comparative Example 4 having the same composition as in Example I except that the component (d) was not contained, the change in acid value was larger, thermo-oxidative stability was poorer, and bearing-lubrication life was shorter.
In Comparative Example 5 having the same composition as in Example 1 except that the component (c) was not contained, the change in acid value was larger, thermo-oxidative stability was poorer, and bearing-lubrication life was shorter.
In Comparative Example 1 having the same composition as in Example 2 except that the conventional amine antioxidant was contained instead of components (c) and (d), the change in acid value was larger, thermo-oxidative stability was poorer, and bearing-lubrication life was shorter.
In Comparative Example 2 in which the ester oil was used as the base oil and the conventional amine antioxidant was contained instead of components (c)-(e), the change in acid value was larger, thermo-oxidative stability was poorer, and bearing-lubrication life was shorter.
In Comparative Example 3 in which the ether oil was used as the base oil and the conventional amine antioxidant was contained instead of components (c)-(e), the change in acid value was larger, thermo-oxidative stability was poorer, and bearing-lubrication life was shortest.

## Claims

1. A grease composition comprising (a) a base oil, (b) a thickener, (c) a compound having alkylthiocarbamoyl group of the general formula (1), and an amine-ketone condensate-based antioxidant. 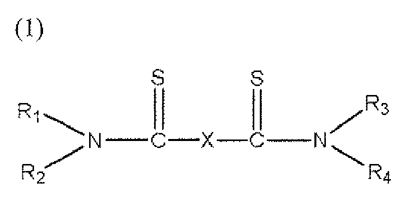 (wherein R₁, R₂, R₃, R₄ are independently C₁- C₂₀ alkyl, and X is S, S-S, S-CH₂-S, S-CH₂CH₂-S, or S-CH₂CH₂CH₂-S )

2. The grease composition according to claim 1, wherein said thickener is at least one selected from the group consisting of lithium soaps and lithium complex soaps.

3. The grease composition according to claim 1, further comprising (e) a metal inactivator.

4. The grease composition according to claim 2, further comprising (e) a metal inactivator.

5. The grease composition according to claim 1, which comprises (a) 50 or more percent by mass of said base oil, (b) 1-30 percent by mass of said thickener, (c) 0.1-10 percent by mass of said compound having alkylthiocarbamoyl group of the general formula (1), and (d) 0.1-10 percent by mass of said amine-ketone condensate-based antioxidant based on the entire grease composition.

6. The grease composition according to claim 2, which comprises (a) 50 or more percent by mass of said base oil, (b) 1-30 percent by mass of said thickener, (c) 0.1-10 percent by mass of said compound having alkylthiocarbamoyl group of the general formula (1), and (d) 0.1-10 percent by mass of said amine-ketone condensate-based antioxidant based on the entire grease composition.

7. The grease composition according to claim 5, comprising (e) 0.1-10 percent by mass of said metal inactivator.

8. The grease composition according to claim 6, comprising (e) 0.1-10 percent by mass of said metal inactivator.

9. A bearing comprising said grease composition according to any one of claims 1 to 8 encapsulated therein.
